# EUROPEAN PATENT SPECIFICATION

(11) **EP 2 231 391 B1**
(45) Date of publication and mention of the grant of the patent: **06.01.2016**
(21) Application number: 08869421.1
(22) Date of filing: 13.11.2008
(51) Int. Cl.: B32B 5/26, A41D 31/02, D04H 13/00

(54) **LIQUID WATER RESISTANT AND WATER VAPOR PERMEABLE GARMENTS COMPRISING HYDROPHOBIC TREATED NONWOVEN MADE FROM NANOFIBERS**
FLÜSSIGWASSERFESTE UND WASSERDAMPFDURCHLÄSSIGE KLEIDUNGSSTÜCKE MIT AUS NANOFASERN HERGESTELLTEM UND BEARBEITETEM WASSERABWEISENDEN VLIESSTOFF
VÊTEMENTS RÉSISTANTS À L'EAU ET PERMÉABLES À LA VAPEUR D'EAU COMPRENANT UN NON-TISSÉ HYDROPHOBE TRAITÉE OBTENU À PARTIR DE NANOFIBRES

(30) Priority: 08.01.2008 US 10504 P
(43) Date of publication of application: 29.09.2010
(73) Proprietor: E. I. du Pont de Nemours and Company, Wilmington, DE 19898 (US)
(72) Inventor: MARIN, Robert, Anthony, Midlothian Virginia 23114 (US); CONLEY, Jill, A., Midlothian Virginia 23114 (US); WILSON, Frederic, Terence, Elkton Maryland 21921 (US)
(74) Representative: Dannenberger, Oliver Andre
(86) International application number: PCT/US2008/083328
(87) International publication number: WO 2009/088564

(56) References cited:
- WO-A-2004/027140
- WO-A-2008/054492
- WO-A-2008/112158
- GB-A- 2 416 781
- US-A1- 2004 116 019
- TOMASINO, CHARLES: "Chemistry & Technology of Fabric Preparation & Finishing" 1992, DEPARTMENT OF TEXTILE ENGINEERING, CHEMISTRY & SCIENCE, COLLEGE OFTEXTILES , NORTH CAROLINE STATE UNIVERSITY , RALEIGH, NORTH CAROLINA , XP002486304 page 102 - page 103 page 159 - page 169

## Description

### FIELD OF THE INVENTION

This invention relates to garments with controlled moisture vapor and liquid water management capability. The invention as claimed and disclosed has particular applications in water repellent outerwear.

### BACKGROUND OF THE INVENTION

Protective garments for wear in rain and other wet conditions should keep the wearer dry by preventing the leakage of water into the garment (i.e., "waterproof") and by allowing perspiration to evaporate from the wearer to the atmosphere (i.e., "breathable").

Fabrics treated with silicone, fluorocarbon, and other water repellants usually allow evaporation of perspiration but are only marginally waterproof; they allow water to leak through under very low pressures and usually leak spontaneously when rubbed or mechanically flexed. Rain garments must withstand the impingement pressure of falling and wind blown rain and the pressures that are generated in folds and creases in the garment.

It is widely recognized that garments must be moisture vapor permeable, or breathable, to be comfortable. Two factors that contribute to the level of comfort of a garment include the amount of air that does or does not pass through a garment as well as the amount of perspiration transmitted from inside to outside so that the undergarments do not become wet and so natural evaporative cooling effects can be achieved. However, even recent developments in breathable fabric articles using microporous films tend to limit liquid penetration at the expense of moisture vapor transmission and air permeability.

Breathable materials that permit evaporation of perspiration have tended to wet through from the rain, thus they are not truly waterproof. Oilskins, polyurethane coated fabrics, polyvinyl chloride films and other materials are waterproof but do not allow satisfactory evaporation of perspiration.

Many waterproof structures currently available comprise a multilayer fabric structure that employs the use of a hydrophobic coating. This fabric structure can be made of a woven fabric layer, a nanoweb-type microporous layer, and another woven or knit layer. The microporous layer is the functional layer of the construction that provides the appropriate air permeability and moisture vapor transmission rate necessary for the targeted application. For examples of such structures, see U.S. patent numbers 5,217,782; 4,535,008; 4,560,611 and 5,204,156.

Clothing provides protection from hazards in the environment. The degree of protection clothing imparts is dependent upon the effectiveness of the barrier characteristics of the clothing. Microporous films have been used in barrier materials to achieve extremely high hydrostatic head liquid barrier properties, but at the expense of breathability, such that their air permeabilities are unacceptably low, rendering fabrics containing such films uncomfortable for the wearer.

WO 2004/027140 A1 concerns a nonwoven fabric comprising a support web and a fibrous barrier web.

The present invention is directed towards a layered material for a garment that provides an improved combination of high liquid water resistance and high vapor transmission rate.

### SUMMARY OF THE INVENTION

In one embodiment, the present invention is directed to a waterproof, breathable garment having the ability to pass moisture vapor while protecting the wearer from water comprising a composite fabric, the composite fabric comprising a fabric layer; and a porous coated nanofiber layer, the nanofiber layer being a nonwoven that comprises nanofibers, comprising at least one porous layer of polymeric nanofibers having a number average diameter between 50 nm to 1000 nm, the coated nanofiber layer having a basis weight of between 1 g/m² and 100 g/m² and a contact angle of a drop of water on the surface of the coated nanofiber layer of greater than 145°; wherein a coating on the surface of the nanofibers comprises a fluorocarbon polymeric moiety and a resin binder or extender; wherein the coated nanofiber layer has a Frazier air permeability of between 0.5 m³/min/m² and 8 m³/min/m², an MVTR of greater than 500 g/m²/day and a hydrostatic head of at least 50 cmwc; wherein the fabric layer is a nonwoven fabric; and wherein the coating forms concave menisci at the intersections of the nanofibers such that the menisci are formed within the pores of the nanofiber layer.

In another embodiment, the present invention is directed to a process for producing a water repellent garment comprising a fabric having a hydrostatic resistance of greater than 50 centimeters of water, an MVTR of at least 500 g/m²/day and an air permeability between 0.5 m³/min/m² and 8 m³/min/m², the process comprising providing a layer of polymeric nanofibers, the nanofiber layer being a nonwoven that comprises nanofibers, having a number average diameter between 50 nm to 1000 nm, a basis weight of between 1 g/m² and 100 g/m²; subjecting the nanofiber layer to a repellent treatment by contacting the nanofiber layer with a liquid thereby forming a coating on the surface of the polymeric nanofibers; and bonding the treated nanofiber layer with a fabric layer; wherein the liquid contains a fluorocarbon polymeric moiety and a resin binder or extender, wherein the fabric layer is a nonwoven fabric layer, and wherein the coating forms concave menisci at the intersections of the nanofibers such that the menisci are formed within the pores of the nanofiber layer.

### BRIEF DESCRIPTION OF THE DRAWINGS

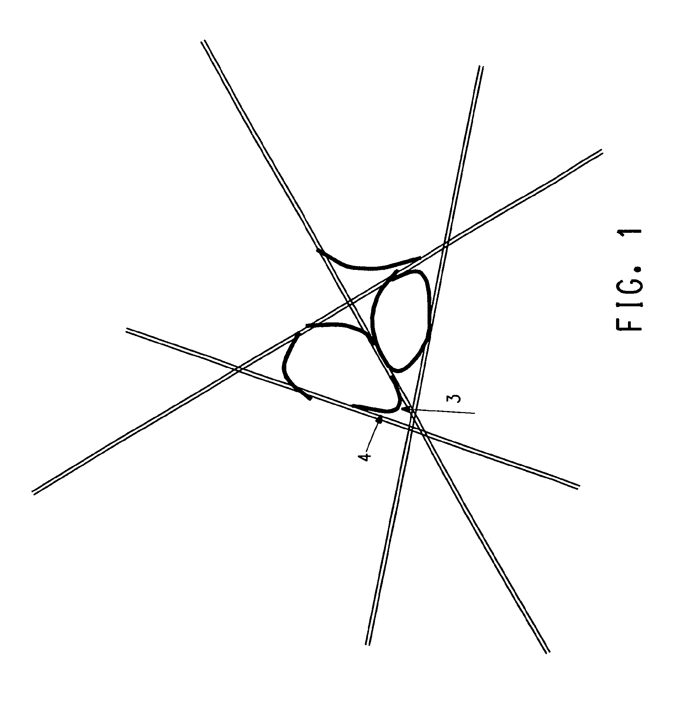

Figure 1 is an illustration of a coated nanofiber web layer useful in the garment of the invention.

### DETAILED DESCRIPTION

The terms "nanofiber layer," "nanofiber web layer," "nanofiber web" and "nanoweb" are used interchangeably herein to refer to a nonwoven that comprises nanofibers.

The term "nanofibers" as used herein refers to fibers having a number average diameter less than 1000 nm, even less than 800 nm, even between 50 nm and 500 nm, and even between 100 and 400 nm. In the case of non-round cross-sectional nanofibers, the term "diameter" as used herein refers to the greatest cross-sectional dimension.

The term "nonwoven" means a web including a multitude of randomly distributed fibers. The fibers generally can be bonded to each other or can be unbonded. The fibers can be staple fibers or continuous fibers. The fibers can comprise a single material or a multitude of materials, either as a combination of different fibers or as a combination of similar fibers each comprised of different materials.

"Meltblown fibers" are fibers formed by extruding a molten thermoplastic material through a plurality of fine, usually circular, die capillaries as molten threads or filaments into converging, usually hot and high velocity, gas, such as disclosed, for example, in U.S. Pat. Nos. 3,849,241 to Buntin et al., 4,526,733 to Lau, and 5,160,746 to Dodge, II et al. Meltblown fibers may be continuous or discontinuous.

"Calendering" is the process of passing a web through a nip between two rolls. The rolls may be in contact with each other, or there may be a fixed or variable gap between the roll surfaces. Advantageously the nip is formed between a soft roll and a hard roll. The "soft roll" is a roll that deforms under the pressure applied to keep two rolls in a calender together. The "hard roll" is a roll with a surface in which no deformation that has a significant effect on the process or product occurs under the pressure of the process. An "unpatterned" roll is one which has a smooth surface within the capability of the process used to manufacture them. There are no points or patterns to deliberately produce a pattern on the web as it passed through the nip, unlike a point bonding roll.

By "garment" is meant any item that is worn by the user to cover or protect some region of the user's body from weather or other factors in the environment outside the body. For example coats, jackets, pants, hats, gloves, shoes, socks, and shirts are all considered garments under this definition.

The term "outer" when used to describe the location of a layer refers to the face of the garment that faces away from the wearer. The term "inner" refers to the user facing side of the garment.

In one embodiment, the invention is directed to a waterproof garment having the ability to simultaneously maintain a high MVTR and a high resistance to liquid water penetration, interchangeably referred to herein as "hydrostatic head," "hydrohead," and "liquid water resistance." The garment contains a nanofiber layer of at least one porous layer of polymeric nanofibers having a basis weight of between 1 g/m² and 100 g/m². The polymeric nanofibers are coated by means of a repellent treatment containing a fluorocarbon polymeric moiety and a resin binder or extender which is soluble in water and/or other solvents.

The repellent treatment forms a coating on the surface of the polymeric nanofibers (referred to herein interchangeably as "the treated nanofibers" and "the coated nanofibers"). The coating forms concave menisci at the intersections of the nanofibers such that the menisci are formed within the pores of the nanofiber layer. By "concave meniscus" is meant a formation of the coating that is bounded, when the pore is viewed in two dimensions, by a generally U-shaped border between two intersecting nanofibers. For simplicity, the menisci are discussed herein in two-dimensional terms. As depicted in Figure 1, the central base portion 3 of the U bridges or straddles the intersection of the nanofibers and the leg portions 4 of the U asymptotically approach the nanofibers until reaching the diameter of the coated nanofibers. The presence of the menisci formed within the pores of the nanofiber layer result in more rounded pores as compared with an equivalent uncoated nanofiber layer. The presence of more rounded pores results in higher levels of hydrostatic head and water repellency of the nanofiber layer. The water repellency of the coated nanofiber layer is indicated by a high contact angle of a drop of water on the surface of the nanofiber layer of greater than 145°, even greater than 147° and even greater than 149°.

The invention further comprises a garment comprising a composite of a first fabric layer adjacent to and in a face-to-face relationship with the coated nanofiber layer, and optionally a second fabric layer adjacent to and in a face-to-face relationship with the nanofiber layer and on the opposite side of the nanofiber layer to the first fabric layer.

The garment of the invention further has a Frazier air permeability of between 0.5 m³/min/m² and 8 m³/min/m², and an MVTR per ASTM E-96B method of greater than 500 g/m²/day and a hydrostatic head of at least 50 centimeters of water column (cmwc).

The nonwoven web includes primarily or exclusively nanofibers, advantageously produced by electrospinning, such as by classical electrospinning or electroblowing, both generally solution spinning processes, and in certain circumstances by meltblowing processes or other suitable processes. Classical electrospinning is a technique illustrated in U.S. Patent No. 4,127,706, wherein a high voltage is applied to a polymer in solution to create nanofibers and nonwoven mats. The nonwoven web may also comprise melt blown fibers.

The "electroblowing" process for producing nanowebs is disclosed in PCT Patent Publication No. WO 03/080905. A stream of polymeric solution comprising a polymer and a solvent is fed from a storage tank to a series of spinning nozzles within a spinneret, to which a high voltage is applied and through which the polymeric solution is discharged. Meanwhile, compressed air that is optionally heated is issued from air nozzles disposed in the sides of or at the periphery of the spinning nozzle. The air is directed generally downward as a blowing gas stream which envelopes and forwards the newly issued polymeric solution and aids in the formation of the fibrous web, which is collected on a grounded porous collection belt above a vacuum chamber. The electroblowing process permits formation of commercial sizes and quantities of nanowebs at basis weights in excess of 1 gsm, even as high as 40 gsm or greater, in a relatively short time period.

A fabric layer can be used as a collection substrate in the process for forming the nanofiber webs, by arranging the fabric layer on the nanofiber web collector to collect and combine the nanofiber web spun on the substrate. The resulting combined web/fabric layer can be used in the garment of the invention.

Polymer materials that can be used in forming the nanowebs of the invention are not particularly limited and include both addition polymer and condensation polymer materials such as, polyacetals, polyamides, polyesters, polyolefins, cellulose ethers and esters, polyalkylene sulfides, polyarylene oxides, polysulfones, modified polysulfone polymers and mixtures thereof. Preferred materials that fall within these generic classes include, poly (vinylchloride), polymethylmethacrylate (and other acrylic resins), polystyrene, and copolymers thereof (including ABA type block copolymers), poly (vinylidene fluoride), poly (vinylidene chloride), polyvinylalcohol in various degrees of hydrolysis (87% to 99.5%) in crosslinked and non-crosslinked forms. Preferred addition polymers tend to be glassy (a T_{g} greater than room temperature). This is the case for polyvinylchloride and polymethylmethacrylate, polystyrene polymer compositions or alloys or low in crystallinity for polyvinylidene fluoride and polyvinylalcohol materials. One preferred class of polyamide condensation polymers are nylon materials, such as nylon-6, nylon-6, 6, nylon 6, 6-6,10 and the like. When the polymer nanowebs of the invention are formed by meltblowing, any thermoplastic polymer capable of being meltblown into nanofibers can be used, including, polyesters such as poly (ethylene terephthalate) and polyamides, such as the nylon polymers listed above.

The coating on the nanofiber layer is formed by treating the nanofiber layer in a bath containing a fluorocarbon polymeric moiety and a resin binder or extender which is soluble in water and/or other solvents such as, for instance, acetic acid esters, ketones, diols and glycolethers. Such resins and extenders include blocked isocyanates, melamine formaldehyde resin, phenol formaldehyde resin, urea formaldehyde resin, emulsions of paraffin wax and melamine resin, silicone resins, acrylic monomers and polymers, including methyl methacrylate and N-methylol acrylamide, emulsions of paraffin wax and zirconium-based salts, and emulsions of paraffin wax and aluminum-based salts. The resin binders and extenders can be crosslinkable or self-crosslinking. In a preferred embodiment, a melamine formaldehyde resin is included in an aqueous bath and the ratio of the fluorocarbon polymeric moiety to the melamine formaldehyde resin is between 2:1 to 4:1, even about 3:1. The fluorocarbon polymeric moiety can be one of the Zonyl® line of surfactants available from E. I. du Pont de Nemours & Co., Wilmington, Delaware

(DuPont). An example of a suitable melamine formaldehyde resin is Berset® 2003 available from Bercen, Inc., Cranston, Rhode Island. When the coating material is applied in an extremely thin layer, little if any change in the air permeability properties of the underlying web is caused. The nanoweb can be immersed in a dispersion containing the coating material and then dried. The nanoweb can also be treated by any conventional repellent treatment means such as dip/squeeze, spray application, gravure roll application, sponge application, kiss roll application and the like. Preferably, the resulting coating on the nanofibers contains at least 2000 ppm fluorine. The coating renders the nanoweb hydrophobic and/or oleophobic.

The as-spun nanofiber layer of the present invention can be calendered in order to impart the desired physical properties to the fabric of the invention. The nanofiber layer can be calendered either prior to or subsequent to the repellent treatment (also referred to as the "hydrophobic coating treatment") described above. Alternatively, the coated nanofiber layer can be calendered together with the fabric layer in order to thermally bond the two layers together. The nanoweb can be fed into a calender nip between two unpatterned rolls in which one roll is an unpatterned soft roll and one roll is an unpatterned hard roll, and the temperature of the hard roll is maintained at a temperature that is between the T_{g}, herein defined as the temperature at which the polymer undergoes a transition from glassy to rubbery state, and the Tₒₘ, herein defined as the temperature of the onset of melting of the polymer, such that the nanofibers of the nanoweb are at a plasticized state when passing through the calender nip. The composition and hardness of the rolls can be varied to yield the desired end use properties of the fabric. In one embodiment of the invention, one roll is a hard metal, such as stainless steel, and the other a soft-metal or polymer-coated roll or a composite roll having a hardness less than Rockwell B 70. The residence time of the web in the nip between the two rolls is controlled by the line speed of the web, preferably between 1 m/min and 50 m/min, and the footprint between the two rolls is the MD distance that the web travels in contact with both rolls simultaneously. The footprint is controlled by the pressure exerted at the nip between the two rolls and is measured generally in force per linear CD dimension of roll, and is preferably between 1 mm and 30 mm.

Further, the nanoweb can be stretched, optionally while being heated to a temperature that is between the T_{g} and the lowest Tₒₘ of the nanofiber polymer. The stretching can take place either before and/or after the web is fed to the calender rolls and in either or both the machine direction or cross direction.

A wide variety of natural and synthetic fabrics are known and may be used as the fabric layer or layers in the present invention, for example, for constructing garments, such as sportswear, rugged outerwear and outdoor gear, protective clothing, etc. (for example, gloves, aprons, chaps, pants, boots, gators, shirts, jackets, coats, socks, shoes, undergarments, vests, waders, hats, gauntlets, sleeping bags, tents, etc.). Typically, vestments designed for use as rugged outerwear have been constructed of relatively loosely-woven fabrics made from natural and/or synthetic fibers having a relatively low strength or tenacity (for example, nylon, cotton, wool, silk, polyester, polyacrylic, polyolefin, etc.). Each fiber can have a tensile strength or tenacity of less than 8 grams per denier (gpd) (70.64 cN/tex), more typically less than 5 gpd (44.15 cN/tex), and in some cases below 3 gpd (26.49 cN/tex). Such materials can have a variety of beneficial properties, for example, dyeability, breathability, lightness, comfort, and in some instances, abrasion-resistance. Alternatively, high tenacity fibers can be employed, having a tenacity greater than 8 grams per denier (gpd) (70.64 cN/tex), more typically greater than 10 gpd (88.3 cN/tex). Such fibers include aramid fibers, oxazole fibers, polyolefin fibers, carbon fibers, titanium fibers and steel fibers.

Nonwoven fabrics can alternatively be used as the outer fabric layer and optional inner fabric layer. Examples of nonwoven fabrics include spunbonded webs, melt blown webs, multi-directional, multi-layer carded webs, air-laid webs, wet-laid webs, spunlaced webs and composite webs comprising more than one nonwoven sheet. Suitable spunbonded webs comprise polyolefin fibers, particularly polyethylene or polypropylene. The polyolefin fibers may contain minor amounts of other comonomer units. As used herein, the term "spunbonded web" means nonwoven web formed of filaments which have been extruded, drawn, and deposited on a continuous collection surface. Bonding can be accomplished by any of several methods including point or pattern bonding, calendering or passing the nonwoven fabric through a saturated-steam chamber at an elevated pressure. An example of a suitable spunbonded polyolefin sheet material is flash spun polyethylene available under the trade name Tyvek® from E. I. du Pont de Nemours and Company.

Different weaving structures and different weaving densities may be used to provide several alternative woven fabrics as a component of the invention. Weaving structures such as plain woven structures, reinforced plain woven structures (with double or multiple warps and/or wefts), twill woven structures, reinforced twill woven structures (with double or multiple warps and/or wefts), satin woven structures, reinforced satin woven structures (with double or multiple warps and/or wefts), knits, felts, fleeces and needlepunched structures may be used. Stretch woven structures, ripstops, dobby weaves, and jacquard weaves are also suitable for use in the present invention.

The nanoweb is bonded to the fabric layers over some fraction of its surface and can be bonded to the fabric layer by any means known to one skilled in the art, for example adhesively, thermally, using an ultrasonic field or by solvent bonding. In one embodiment the nanoweb is bonded adhesively using a solution of a polymeric adhesive such as a polyurethane and allowing the solvent to evaporate. In a further embodiment, when the nanoweb is solution spun directly onto a fabric layer and residual electrospinning solvent is used to achieve solvent bonding.

### EXAMPLES

Hydrostatic head or "hydrohead" (ISO 811) is a convenient measure of the ability of a fabric to prevent water penetration. It is presented as the pressure, in centimeters of water column (cmwc), required to force liquid water through a fabric. It is known that hydrohead depends inversely on pore size. Lower pore size produces higher hydrohead and higher pore size produces lower hydrohead. A ramp rate of 60 cmwc per minute was used in the measurements below.

Frazier Air Permeability was measured according to ASTM D737. In this measurement, a pressure difference of 124.5 N/m² (0.5 inches of water column) is applied to a suitably clamped fabric sample and the resultant air flow rate is measured and reported in units of m³/min/m².

Moisture Vapor Transmission Rate ("MVTR") was measured according to ASTM E96 B and is reported in units of g/m²/day.

Contact Angle was measured for a water droplet at rest on the surface of a sample using video contact angle equipment VCA2500xe, manufactured by Advanced Surface Technologies Products (Billerica, Massachusetts).

Unless otherwise specified, fluorosurfactant treatment was by means of a dip and squeeze method including hexanol at 0.6 wt% as a wetting agent, in a 400 g water bath where both sides of the nanoweb are fully submerged in the bath. The nanoweb was then dried in an oven at 140 °C for three minutes.

### Comparative Example 1

A nanofiber layer made from nylon 6, 6 with a basis weight of 13 gsm (grams per square meter) was treated with a telomeric fluorocarbon polymeric moiety (Zonyl® 7040, Du Pont, Wilmington, DE) at 4.6 wt% solids (as received) in a water bath. The Zonyl® (commercially available from E. I. du Pont de Nemours and Company) was applied using a dip and squeeze method where both sides of the construction are fully submerged in the bath. The wet pick-up of the repellent treatment liquid was 104 wt% based on the weight of the nanofiber layer. The coating on the resulting nanofiber layer had a fluorine content of 3010 ppm. The nanofiber layer was then placed in an electrically heated oven at a temperature of 140 °C with a residence time of 3 minutes.

The treated nanofiber layer was then placed under a mesh support screen, with two gaskets on either side at the edge in a test clamp. This screen was used to keep the nanoweb from bulging while applying hydrostatic pressure. The hydrohead, Frazier air permeability and MVTR of the nanofiber layer were measured and the measurements given in Table 1.

A water drop was dispensed from a syringe onto two samples of the nanofiber layer and 3 contact angle measurements were made for each sample. The measurements are given in Table 1.

### Example 1

A nanofiber layer was produced and treated with Zonyl® 7040 in the same manner as described above with the exception of the addition of a melamine formaldehyde resin (Berset® 2003, available from Bercen, Inc., Cranston, Rhode Island) to the bath. The ratio of the Zonyl® 7040 to the melamine formaldehyde resin was approximately 3:1.

The treated nanofiber layer was placed in a test clamp and properties measured as in Comparative Example 1. The hydrohead, Frazier air permeability and MVTR of the nanofiber layer were measured and the measurements given in Table 1.

Two samples of the nanofiber layer were prepared and 3 contact angle measurements were made for each sample as in Comparative Example 1. The measurements are given in Table 1.

**Table 1**

| Example | Basis Weight (g/m²) | MVTR (g/m²/day) | Frazier Air Permeability (m³/min/m²) | HH (cmwc) | Avg. of 3 Contact Angle Measurements (degrees) | Std. Dev. of Contact Angle (degrees) |
|---|---|---|---|---|---|---|
| C.Ex. 1 (sample 1) | 13 | 2077 | 9.13 | 185 | 142 | 3.0 |
| C.Ex. 1 (sample 2) | | | | | 138 | 0.6 |
| Ex. 1 (sample 1) | 13 | 2104 | 7.56 | 260 | 147 | 1.1 |
| Ex. 1 (sample 2) | | | | | 149 | 0.8 |

As can be seen from the data, the inclusion of the melamine formaldehyde resin in the treatment bath significantly increases the hydrohead and the water repellency of the nanofiber layer without adversely affecting the MVTR.

## Claims

1. A waterproof, breathable garment having the ability to pass moisture vapor while protecting the wearer from water comprising a composite fabric comprising:
a fabric layer; and
a porous coated nanofiber layer, the nanofiber layer being a nonwoven that comprises nanofibers, comprising at least one porous layer of polymeric nanofibers having a number average diameter between 50 nm to 1000 nm, the coated nanofiber layer having a basis weight of between 1 g/m² and 100 g/m²;
**characterized in that**
a coating on the surface of the nanofibers comprises a fluorocarbon polymeric moiety and a resin binder or extender;
the coated nanofiber layer has a Frazier air permeability of between 0.5 m³/min/m² and 8 m³/min/m², an MVTR of greater than 500 g/m²/day and a hydrostatic head of at least 50 cmwc, and
the fabric layer is a nonwoven fabric, and wherein the coating forms concave menisci at the intersections of the nanofibers such that the menisci are formed within the pores of the nanofiber layer,
wherein by "concave meniscus" is meant a formation of the coating that is bounded, when the pore is viewed in two dimensions, by a generally U-shaped border between two intersecting nanofibers.

2. The garment of claim 1, wherein the resin binder or extender is selected from the group consisting of blocked isocyanates, melamine formaldehyde resin, phenol formaldehyde resin, urea formaldehyde resin, emulsions of paraffin wax and melamine resin, acrylic monomers and polymers, silicone resins, emulsions of paraffin wax and zirconium-based salts and emulsions of paraffin wax and aluminum-based salts.

3. The garment of claim 1, wherein the contact angle of a drop of water on the surface of the coated nanofiber layer is greater than 145°.

4. The garment of claim 1, wherein the coated nanofiber layer and the fabric layer are bonded to each other over a fraction of their surfaces.

5. The garment of claim 1, wherein the nanofiber layer comprises nanofibers of a polymer selected from the group consisting of polyacetals, polyamides, polyesters, cellulose ethers, cellulose esters, polyalkylene sulfides, polyarylene oxides, polysulfones, modified polysulfone polymers and combinations thereof.

6. The garment of claim 1, wherein the nanofiber layer comprises nanofibers of a polymer selected from the group consisting of poly(vinylchloride), polymethylmethacrylate, polystyrene, and copolymers thereof, poly(vinylidene fluoride), poly(vinylidene chloride), polyvinylalcohol in crosslinked and non-crosslinked forms.

7. The garment of claim 5, wherein the polymer is selected from the group consisting of nylon-6, nylon-6,6, and nylon 6,6-6,10.

8. A process for producing a water repellent garment comprising a fabric having a hydrostatic resistance of greater than 50 centimeters of water, an MVTR of at least 500 g/m²/day and an air permeability between 0.5 m³/min/m² and 8 m³/min/m², the process comprising:
a. providing a layer of polymeric nanofibers, the nanofiber layer being a nonwoven that comprises nanofibers, having a number average diameter between 50 nm to 1000 nm, a basis weight of between 1 g/m² and 100 g/m²,
b. subjecting the nanofiber layer to a repellent treatment by contacting the nanofiber layer with a liquid thereby forming a coating on the surface of the polymeric nanofibers; and
c. bonding the treated nanofiber layer with a fabric layer,
**characterized in that**
the liquid contains a fluorocarbon polymeric moiety and a resin binder or extender, and
the fabric layer is a nonwoven fabric layer, and wherein the coating forms concave menisci at the intersections of the nanofibers such that the menisci are formed within the pores of the nanofiber layer,
wherein by "concave meniscus" is meant a formation of the coating that is bounded, when the pore is viewed in two dimensions, by a generally U-shaped border between two intersecting nanofibers.

9. The process of claim 8, wherein the ratio of the fluorocarbon polymeric moiety to the resin binder or extender is between 2:1 to 4:1.

10. The process of claim 8, further comprising calendering the nanofiber layer prior to subjecting the nanofiber layer to the repellent treatment.

11. The process of claim 8, further comprising calendering the nanofiber layer after subjecting the nanofiber layer to the repellent treatment and before bonding the nanofiber layer with the fabric layer.

12. The process of claim 8, further comprising calendering the nanofiber layer and the fabric layer together after subjecting the nanofiber layer to the repellent treatment.

13. The process of claim 8, wherein the resin binder or extender is selected from the group consisting of blocked isocyanates, melamine formaldehyde resin, phenol formaldehyde resin, urea formaldehyde resin, emulsions of paraffin wax and melamine resin, acrylic monomers and polymers, silicone resins, emulsions of paraffin wax and zirconium-based salts and emulsions of paraffin wax and aluminum-based salts.

## Patentansprüche

1. Wasserdichtes, atmungsfähiges Kleidungsstück, das die Fähigkeit aufweist, Feuchtigkeitsdampf durchzulassen, während es den Träger gegen Wasser schützt, umfassend einen Verbundstoff umfassend:
eine Textilstofflage; und
eine poröse, beschichtete Nanofaserlage, wobei die Nanofaserlage ein Vliesstoff ist, der Nanofasern umfasst, umfassend mindestens eine poröse Lage aus polymeren Nanofasern, die einen zahlendurchschnittlichen Durchmesser zwischen 50 nm und 1000 nm aufweisen, wobei die beschichtete Nanofaserlage ein Flächengewicht zwischen 1 g/m² und 100 g/m² aufweist;
**dadurch gekennzeichnet, dass**
eine Beschichtung auf der Oberfläche der Nanofasern einen polymeren Fluorkohlenstoffanteil und ein Harzbindemittel oder Streckmittel umfasst;
die beschichtete Nanofaserlage eine Frazier-Luftdurchlässigkeit zwischen 0,5 m³/min_{/}m² und 8 m³/min/m², eine Wasserdampfdurchlässigkeit (MVTR) von mehr als 500 g/m²/Tag und eine Wassersäule von mindestens 50 cmWS aufweist und
die Textilstofflage ein Vliesstoff ist und wobei die Beschichtung konkave Menisken an den Kreuzungsstellen der Nanofasern bildet, derart, dass die Menisken innerhalb der Poren der Nanofaserlage gebildet werden,
wobei mit "konkavem Meniskus" eine Bildung der Beschichtung gemeint ist, die, wenn die Pore in zwei Dimensionen betrachtet wird, durch eine allgemein U-förmige Begrenzung zwischen zwei sich überschneidenden Nanofasern begrenzt ist.

2. Kleidungsstück nach Anspruch 1, wobei das Harzbindemittel oder Streckmittel aus der Gruppe ausgewählt ist bestehend aus geblockten Isocyanaten, MelaminFormaldehydharz, Phenol-Formaldehydharz, Harnstoff-Formaldehydharz, Emulsionen von Paraffinwachs und Melaminharz, Acrylmonomeren und -polymeren, Siliconharzen, Emulsionen von Paraffinwachs und Salzen auf Zirconiumbasis und Emulsionen von Paraffinwachs und Salzen auf Aluminiumbasis.

3. Kleidungsstück nach Anspruch 1, wobei der Kontaktwinkel eines Tropfens Wasser auf der Oberfläche der beschichteten Nanofaserlage mehr als 145 ° beträgt.

4. Kleidungsstück nach Anspruch 1, wobei die beschichtete Nanofaserlage und die Textilstofflage über einen Teil ihrer Oberflächen aneinander bondiert sind.

5. Kleidungsstück nach Anspruch 1, wobei die Nanofaserlage Nanofasern aus einem Polymer umfasst ausgewählt aus der Gruppe bestehend aus Polyacetalen, Polyamiden, Polyestern, Cellulosethern, Cellulosestern, Polyalkylensulfiden, Polyarylenoxiden, Polysulfonen, modifizierten Polysulfonpolymeren und Kombinationen davon.

6. Kleidungsstück nach Anspruch 1, wobei die Nanofaserlage Nanofasern aus einem Polymer umfasst ausgewählt aus der Gruppe bestehend aus Poly(vinylchlorid), Polymethylmethacrylat, Polystyrol und Copolymeren davon, Poly(vinylidenfluorid), Poly(vinylidenchlorid), Polyvinylalkohol in vernetzten und nichtvernetzten Formen.

7. Kleidungsstück nach Anspruch 5, wobei das Polymer aus der Gruppe ausgewählt ist bestehend aus Nylon-6, Nylon-6,6 und Nylon 6,6 - 6,10.

8. Verfahren für die Herstellung eines wasserdichten Kleidungsstücks, das einen Textilstoff umfasst, der einen hydrostatischen Widerstand von mehr als 50 Zentimeter Wasser, eine Wasserdampfdurchlässigkeit (MVTR) von mehr als 500 g/m²/Tag und eine Luftdurchlässigkeit zwischen 0,5 m³/min/m² und 8 m³/min/m² aufweist, wobei das Verfahren Folgendes umfasst:
a. das Bereitstellen einer Lage polymerer Nanofasern, wobei die Nanofasern ein Vliesstoff sind, der Nanofasern umfasst, die einen zahlendurchschnittlichen Durchmesser zwischen 50 nm und 1000 nm, ein Flächengewicht zwischen 1 g/m² und 100 g/m² aufweisen,
b. das Unterwerfen der Nanofaserlage einer abweisenden Behandlung durch Kontaktieren der Nanofaserlage mit einer Flüssigkeit, um dadurch eine Beschichtung auf der Oberfläche der polymeren Nanofasern zu bilden; und
c. das Bondieren der behandelten Nanofaserlage mit einer Textilstofflage,
**dadurch gekennzeichnet, dass**
die Flüssigkeit einen polymeren Fluorkohlenstoffanteil und ein Harzbindemittel oder Streckmittel enthält;
die Textilstofflage ein Vliesstoff ist und wobei die Beschichtung konkave Menisken an den Kreuzungsstellen der Nanofasern bildet, derart, dass die Menisken innerhalb der Poren der Nanofaserlage gebildet werden,
wobei mit "konkavem Meniskus" eine Bildung der Beschichtung gemeint ist, die, wenn die Pore in zwei Dimensionen betrachtet wird, durch eine allgemein U-förmige Begrenzung zwischen zwei sich überschneidenden Nanofasern begrenzt ist.

9. Verfahren nach Anspruch 8, wobei das Verhältnis des polymeren Fluorkohlenstoffanteils zu dem Harzbindemittel oder Streckmittel 2:1 bis 4:1 beträgt.

10. Verfahren nach Anspruch 8, ferner das Kalandrieren der Nanofaserlage vor Unterwerfen der Nanofaserlage der abweisenden Behandlung umfassend.

11. Verfahren nach Anspruch 8, ferner das Kalandrieren der Nanofaserlage nach Unterwerfen der Nanofaserlage der abweisenden Behandlung und vor Bondieren der Nanofaserlage mit der Textilstofflage umfassend.

12. Verfahren nach Anspruch 8, ferner das Kalandrieren der Nanofaserlage und der Textilstofflage zusammen nach Unterwerfen der Nanofaserlage der abweisenden Behandlung umfassend.

13. Verfahren nach Anspruch 8, wobei das Harzbindemittel oder Streckmittel aus der Gruppe ausgewählt sind bestehend aus geblockten Isocyanaten, MelaminFormaldehydharz, Phenol-Formaldehydharz, Harnstoff-Formaldehydharz, Emulsionen von Paraffinwachs und Melaminharz, Acrylmonomeren und -polymeren, Siliconharzen, Emulsionen von Paraffinwachs und Salzen auf Zirconiumbasis und Emulsionen von Paraffinwachs und Salzen auf Aluminiumbasis.

## Revendications

1. Vêtement imperméable à l'eau, perméable à l'air ayant la capacité de faire passer la vapeur d'eau tout en protégeant le porteur contre l'eau comprenant un textile composite comprenant:
une couche de textile; et
une couche poreuse de nanofibres enduite, la couche de nanofibres étant un non-tissé qui comprend des nanofibres, comprenant au moins une couche poreuse de nanofibres polymères ayant un diamètre moyen en nombre compris entre 50 nm et 1000 nm, la couche de nanofibres enduite ayant un poids de base compris entre 1 g/m² et 100 g/m²;
**caractérisé en ce que**
un revêtement sur la surface des nanofibres comprend une fraction polymère d'hydrocarbure fluoré et un liant de type résine ou un diluant;
la couche de nanofibres enduite a une perméabilité à l'air de Frazier comprise entre 0,5 m³/min/m² et 8 m³/min/m², un TTVE supérieur à 500 g/m²/jour et une pression hydrostatique d'au moins 50 cmCE, et
la couche de textile étant un textile non-tissé, et le revêtement formant des ménisques concaves aux intersections des nanofibres de sorte que les ménisques soient formés à l'intérieur des pores de la couche de nanofibres,
où par « ménisque concave » est signifié une formation du revêtement qui est lié, lorsque le pore est visualisé en deux dimensions, par une bordure généralement en forme de U entre deux nanofibres en intersection.

2. Vêtement selon la revendication 1, où le liant de type résine ou le diluant est sélectionné(e) dans le groupe constitué des isocyanates bloqués, de la résine mélamine formaldéhyde, de la résine phénol formaldéhyde, de la résine d'urée formaldéhyde, des émulsions de cire de paraffine et de la résine mélamine, des monomères et des polymères acryliques, des résines de silicone, des émulsions de cire de paraffine et de sels à base de zirconium et des émulsions de cire de paraffine et de sels à base d'aluminium.

3. Vêtement selon la revendication 1, où l'angle de contact d'une goutte d'eau sur la surface de la couche de nanofibres enduite est supérieur à 145°.

4. Vêtement selon la revendication 1, où la couche de nanofibres enduite et la couche de textile sont liées l'une à l'autre sur une partie de leurs surfaces.

5. Vêtement selon la revendication 1, la couche de nanofibres comprenant des nanofibres d'un polymère sélectionné dans le groupe constitué des polyacétals, des polyamides, des polyesters, des éthers de cellulose, des esters de cellulose, des poly(sulfures d'alkylène), des poly(oxydes d'arylène), des polysulfones, des polymères de polysulfone modifiée et de leurs combinaisons.

6. Vêtement selon la revendication 1, où la couche de nanofibres comprend des nanofibres d'un polymère sélectionné dans le groupe constitué du poly(chlorure de vinyle), du poly(méthacrylate de méthyle), du polystyrène, et de leurs copolymères, du poly(fluorure de vinylidène), du poly(chlorure de vinylidène), du poly(alcool de vinyle) sous des formes réticulées et non réticulées.

7. Vêtement selon la revendication 5, le polymère étant sélectionné dans le groupe constitué du nylon-6, du nylon-6,6, et du nylon 6,6-6,10.

8. Procédé de production d'un vêtement hydrofuge comprenant un textile ayant une résistance hydrostatique supérieure à 50 centimètres d'eau, un TTVE d'au moins 500 g/m²/jour et une perméabilité à l'air comprise entre 0,5 m³/min/m² et 8 m³/min/m², le procédé comprenant:
a. la fourniture d'une couche de nanofibres polymères, la couche de nanofibres étant un non-tissé qui comprend des nanofibres, ayant un diamètre moyen en nombre compris entre 50 nm et 1000 nm, un poids de base compris entre 1 g/m² et 100 g/m²,
b. la soumission de la couche de nanofibres à un traitement répulsif par la mise en contact de la couche de nanofibres avec un liquide formant de là un revêtement sur la surface des nanofibres polymères; et
c. la liaison de la couche de nanofibres traitée avec une couche de textile,
**caractérisé en ce que**
le liquide contient une fraction polymère d'hydrocarbure fluoré et un liant de type résine ou un diluant, et
la couche de textile est une couche de textile non tissée, et le revêtement formant des ménisques concaves aux intersections des nanofibres de sorte que les ménisques soient formés à l'intérieur des pores de la couche de nanofibres,
où par « ménisque concave » est signifié une formation du revêtement qui est lié, lorsque le pore est visualisé en deux dimensions, par une bordure généralement en forme de U entre deux nanofibres en intersection.

9. Procédé selon la revendication 8, le rapport de la fraction polymère d'hydrocarbure fluoré au liant de type résine ou à le diluant étant compris entre 2:1 à 4:1.

10. Procédé selon la revendication 8, comprenant en outre le calandrage de la couche de nanofibres avant la soumission de la couche de nanofibres au traitement répulsif.

11. Procédé selon la revendication 8, comprenant en outre le calandrage de la couche de nanofibres après la soumission de la couche de nanofibres au traitement répulsif et avant la liaison de la couche de nanofibres à la couche de textile.

12. Procédé selon la revendication 8, comprenant en outre le calandrage de la couche de nanofibres et de la couche de textile ensemble après la soumission de la couche de nanofibres au traitement répulsif.

13. Procédé selon la revendication 8, le liant de type résine ou le diluant étant sélectionné(e) dans le groupe constitué des isocyanates bloqués, de la résine mélamine formaldéhyde, de la résine phénol formaldéhyde, de la résine d'urée formaldéhyde, des émulsions de cire de paraffine et de résine mélamine, des monomères et des polymères acryliques, des résines de silicone, des émulsions de cire de paraffine et de sels à base de zirconium et des émulsions de cire de paraffine et de sels à base d'aluminium.
